# EUROPEAN PATENT SPECIFICATION

(11) **EP 1 770 659 B1**
(45) Date of publication and mention of the grant of the patent: **25.04.2018**
(21) Application number: 06018460.3
(22) Date of filing: 04.09.2006
(51) Int. Cl.: G06Q 20/34, G07F 7/10

(54) **Portable electronic device and IC card**
Tragbare elektronische Vorrichtung und IC-Karte
Dispositif électronique portatif et carte à puce

(30) Priority: 30.09.2005 JP 2005288002
(43) Date of publication of application: 04.04.2007
(73) Proprietor: Kabushiki Kaisha Toshiba, Minato-ku, Tokyo 105-8001 (JP)
(72) Inventor: Yanagida, Masaru, Tokyo 105-8001 (JP)
(74) Representative: Kramer Barske Schmidtchen Patentanwälte PartG mbB

(56) References cited:
- EP-A2- 0 583 006
- EP-A2- 1 085 395
- JP-A- H 052 536
- US-A- 6 141 752
- "ISO/IEC 7816 Part 4: Interindustry command for interchange", INTERNATIONAL STANDARD ISO/IEC, XX, XX, 28 July 2005 (2005-07-28), pages 1-76, XP002406777,

## Description

The present invention relates to a portable electronic device and an IC card which have, for example, a writable/rewritable nonvolatile memory and a control element such as a central processing unit (CPU) and which execute various kinds of processing on the basis of instruction data supplied from the external.

Heretofore, as a portable electronic device, there has been an IC card in which an IC module having functions of a memory, a CPU, etc, is embedded in a case constructed by plastic plates and others. In such an IC card, data is written into a rewritable nonvolatile memory in response to a command from an external device, or data is read from the nonvolatile memory.

Furthermore, for example, in ISO 7816 which is a standard specification of the IC card, data comprising an identifier, length information and a data portion is defined. The identifier indicates the kind of data. The length information indicates the length of the data. The data portion stores the data itself. Some of the data used for the IC card have a so-called nested structure. The data having the nested structure is identified by, for example, the identifier. It is to be noted that a structured tag field is defined with regard to data having the nested structure by, for example, Annex D to ISO/IEC 7816.

EP 1 085 395 A2 discloses an access control system for files on a memory card, the memory card including a plurality of data files and a control file, which comprises control information for determining whether data read from a data file is authorized to include the data type of the data read therefrom.

JP 05002536 A discloses an IC card for correcting or erasing data and preventing the reading of incorrect data or unnecessary data.

In the conventional IC card as described above, all the data in a range specified by the command is read even in the case of the data having the nested structure. That is, in the conventional IC card, all the data in the specified range is read even when the data having the nested structure contains unnecessary data. It is an object of this invention to provide a module for a portable electronic device, such as an IC card, capable of making data processing more efficient. This is achieved by the module of claim 1. Further developments are set forth in the sub-claims. The invention can be more fully understood from the following detailed description when taken in conjunction with the accompanying drawings, in which:
FIG. 1 is a block diagram schematically showing the configuration of an IC card system including an IC card as a portable electronic device according to an embodiment of the present invention;
FIG. 2 is a diagram schematically showing an example of the configuration of the IC card;
FIG. 3 is a diagram schematically showing one example of data having a nested structure stored in a memory;
FIG. 4 is a diagram schematically showing a specific example of the data having the nested structure;
FIG. 5 is a flowchart for explaining the processing of reading the nested structure data in response to a data read command;
FIG. 6 is a flowchart for explaining the processing of reading the nested structure data in response to the data read command;
FIG. 7 is a diagram for explaining the relation among an output counter, a read pointer and an output buffer in the processing of reading the data having the nested structure;
FIG. 8 is a diagram for explaining the relation among the output counter, the read pointer and the output buffer in the processing of reading the data having the nested structure;
FIG. 9 is a diagram for explaining the relation among the output counter, the read pointer and the output buffer in the processing of reading the data having the nested structure; and
FIG. 10 is a diagram for explaining the relation among the output counter, the read pointer and the output buffer in the processing of reading the data having the nested structure.

An embodiment of the present invention will hereinafter be described with reference to the drawings.

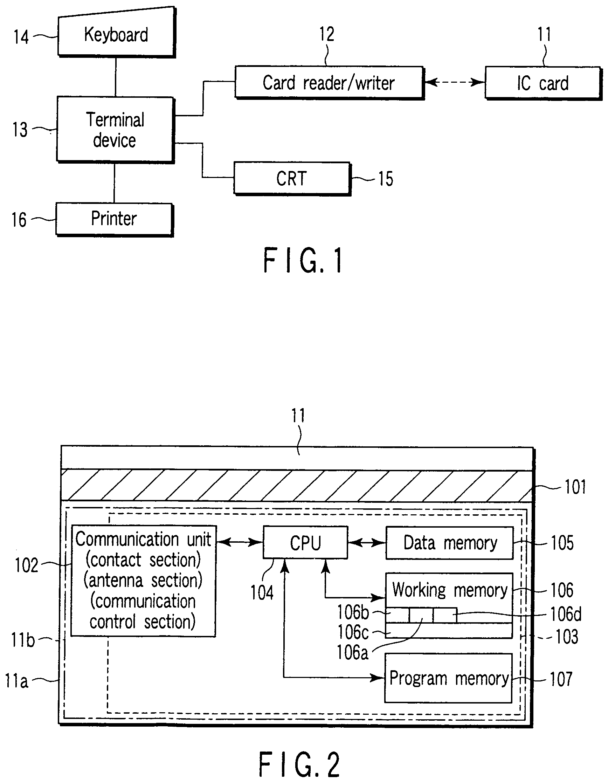

FIG. 1 shows an example of the configuration of an IC card system including an IC card as a portable electronic device according to the present invention. This IC card system comprises an IC card 11, a card reader/writer 12, a terminal device 13, a keyboard 14, a display device (CRT) 15, a printer 16, etc.

As shown in FIG. 1, in this IC card system, the IC card 11 is capable of communicating with the terminal device 13 via the card reader/writer 12. The card reader/writer 12 has a communication unit using a communication method complying with the IC card 11.

The terminal device 13 comprises, for example, a personal computer having a control unit, a memory, various interfaces, etc. In the terminal device 13, the control unit executes a control program stored in the memory to achieve various functions. To the terminal device 13, there are connected the card reader/writer 12, the keyboard 14, the display device 15, the printer 16, etc. The keyboard 14 functions as an operation unit.

The keyboard 14 supplies to the terminal device 13 signals indicating keys with which input has been performed. The display device 15 performs various kinds of display in accordance with display control by the terminal device 13. The display device 15 comprises a CRT or a liquid crystal display. The printer 16 prints print data supplied from the terminal device 13.

Next, an example of the configuration of the IC card 11 will be described.

FIG. 2 is a diagram for explaining the example of the configuration of the IC card 11.

The IC card 11 contains a module 11b in a case forming a main body 11a. Further, a magnetic stripe portion 101 is provided on the surface of the main body 11a of the IC card 11.

The magnetic stripe portion 101 is provided on the surface of the card main body 11a. The magnetic stripe portion 101 comprises a magnetic storage unit.

The module 11b has a communication unit 102, a CPU 104, a data memory 105, a working memory 106, a program memory 107, etc. The module 11b comprises an IC chip and an interface portion that are integrally IC-modularized in a connected state. The module 11b is buried in the main body 11a of the IC card.

The communication unit 102 performs data communication with the reader/writer 12. The communication unit 102 comprises a communication control section and an interface section. Moreover, the communication unit 102 has a configuration complying with the communication method of the IC card 11. For example, the communication unit 102 enables a communication method of a contactless-type (wireless) IC card or a contact-type IC card.

When the IC card 11 has a communication method as the contactless-type (wireless) IC card, the communication unit 102 comprises an antenna as the interface section and the communication control section. In this case, the communication unit 102 receives by the antenna modulated waves transmitted from the reader/writer 12, and demodulates the received modulated waves by the communication control section. The communication unit 102 causes the communication control section to modulate data to be sent to the external, and sends the modulated signal as modulated waves by the antenna. Further, the communication unit 102 generates, from the modulated waves received by the antenna, a power source and a clock to be supplied to internal circuits.

Furthermore, when the IC card 11 has a communication method as the contact-type IC card, the communication unit 102 comprises a contact section. In this case, the contact section contacts an IC card terminal portion (not shown) provided in the reader/writer 12. The contact section transmits/receives data to/from the reader/writer. Further, the power source and the clock obtained from the reader/writer 12 via the contact section are supplied to each unit in the IC card 11.

The communication control unit of the communication unit 102, the CPU 104, the data memory 105, the working memory 106 and the program memory 107 are constituted by one or a plurality of IC chips 103. The IC chip 103 is connected with the interface of the communication unit 102 to integrally constitute the module 11b.

The CPU 104 is a control unit for achieving various kinds of processing on the basis of the control program and control data stored in the program memory 107 or the data memory 105. For example, the CPU 104 performs various kinds of determination processing, judgment processing, data processing (data writing, data reading), etc.

The data memory 105 comprises a nonvolatile memory such as an electronically erasable and programmable read only memory (EEPROM) capable of erasing or rewriting data. The data memory 105 stores, for example, data for applications as functions to be achieved by the IC card 11. It is to be noted that the data memory 105 stores, for example, as functions to be achieved by the IC card 11, data for applications to enable functions such as a credit card function, a card function for a customer loyalty system and an ID card function.

The working memory 106 comprises a volatile memory such as a random access memory (RAM). The working memory 106 functions, for example, as a memory for an operation of temporarily retaining processing data. The working memory 106 temporarily stores, for example, processing data being executed by the CPU 104, transmission data to be transmitted by the communication unit 102 or data received by the communication unit 102. Further, the working memory 106 is provided with an output counter 106a, a read pointer 106b, an output buffer 106c, a read range counter 106d, etc. The output counter 106a, the read pointer 106b, the output buffer 106c and the read range counter 106d will be described later in detail.

The program memory 107 comprises unrewritable fixed memory such as a mask read only memory (ROM). The program memory 107 stores, for example, a control program of the CPU 104.

Next, an example of the configuration of the data memory 105 will be described.

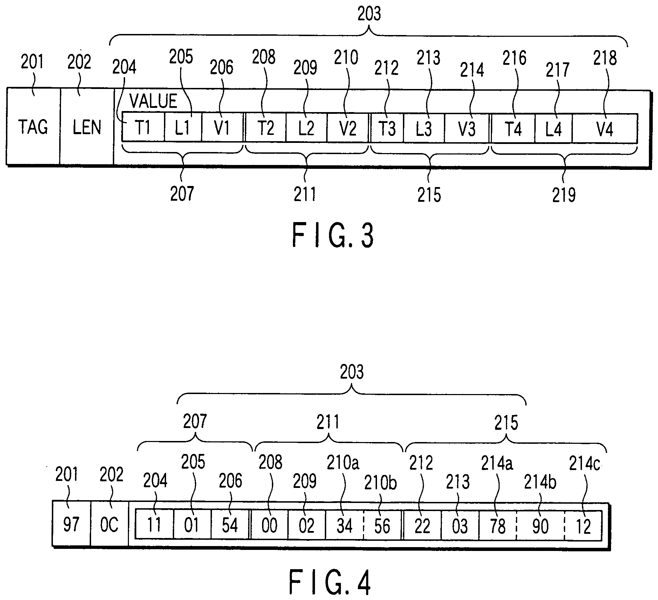

FIG. 3 shows an example of the configuration of data stored in the data memory 105.

The data shown in FIG. 3 is data having a nested structure. It is to be noted that the data shown in FIG. 3 is stored in the data memory 105 as an elementary file (EF) here.

In the example shown in FIG. 3, the data comprises an identifier (TAG) 201 indicating the kind of the entire data, length information (LEN) 202 indicating the length of the data (a data portion 203), and the data portion (value) 203 for storing the data itself.

It is to be noted that, here, the identifier 201 is also called a parent identifier, the length information 202 is also called parent length information, and the data portion 203 is also called a parent data portion, and that the entire data comprising the identifier 201, the length information 202 and the data portion 203 is also called parent data.

The parent identifier (TAG) 201 indicates the kind of the parent data. The parent length information 202 indicates the length of the parent data portion 203. The parent data portion 203 stores the parent data itself (here, a plurality of child data described later).

Furthermore, when the parent data is invalidated, a particular value (e.g., "00") indicating that the parent data is invalid is set in the parent identifier 201.

In the example shown in FIG. 3, the parent data portion 203 further stores a plurality of data 207, 211, 215 and 219. The data 207, 211, 215 and 219 comprise identifiers (T1, T2, T3 and T4) 204, 208, 212 and 216, length information (L1, L2, L3 and L4) 205, 209, 213 and 217, and data portions (V1, V2, V3 and V4) 206, 210, 214 and 218, respectively.

It is to be noted that the data 207, 211, 215 and 219 are also referred to as child data (first, second, third and fourth child data) here. The identifiers (T1, T2, T3 and T4) 204, 208, 212 and 216 are also referred to as child identifiers (first, second, third and fourth child identifiers). The length information (L1, L2, L3 and L4) 205, 209, 213 and 217 are also referred to as child length information (first, second, third and fourth child length information). The data portions (V1, V2, V3 and V4) 206, 210, 214 and 218 are also referred to as child data portions (first, second, third and fourth child data portions).

That is, the parent data portion 203 of the parent data shown in FIG. 3 stores the first child data 207 comprising the first child identifier (T1) 204, the first child length information (L1) 205 and the first child data portion (V1) 206, the second child data 211 comprising the second child identifier (T2) 208, the second child length information (L2) 209 and the second child data portion (V2) 210, the third child data 215 comprising the third child identifier (T3) 212, the third child length information (L3) 213 and the third child data portion (V3) 214, and the fourth child data 219 comprising the fourth child identifier (T4) 216, the fourth child length information (L4) 217 and the fourth child data portion (V4) 218.

Furthermore, the first, second, third and fourth child data 207, 211, 215 and 219 are stored in the parent data portion 203 in a combined state.

Moreover, when the particular child data 207 (or 211, 215, 219) is invalidated, a particular value (e.g., "00") indicating that this child data is invalid is set in the child identifier 204 (or 208, 212, 216) of the child data.

It is to be noted that a data structure as described above is also referred to as a TLV structure.

Furthermore, FIG. 4 is a diagram showing a specific example of the data having the nested structure.

It is to be noted that, in the example shown in FIG. 4, specific data is stored in the data having the structure as shown in FIG. 3. Further, in the example shown in FIG. 4, numbers are expressed in hexadecimal form unless otherwise stated (e.g., AA → 0xAA).

In the example shown in FIG. 4, each of the parent identifier 201, the first child identifier 204, the second child identifier 208, the third child identifier 212, the parent length information 202, the first child length information 205, the second child length information 209 and the third child length information 213 is 1-byte (8-bit) data. Moreover, in the example shown in FIG. 4, the parent data portion 203 and the first child data portion 206 are 1-byte (8-bit) data, the second child data portion 210 (210a, 210b) are 2-byte (16-bit) data, and the third child data portion 214 (214a, 214b, 214c) are 3-byte (24-bit) data.

Next, the processing of reading the data having the nested structure having the above configuration will be described.

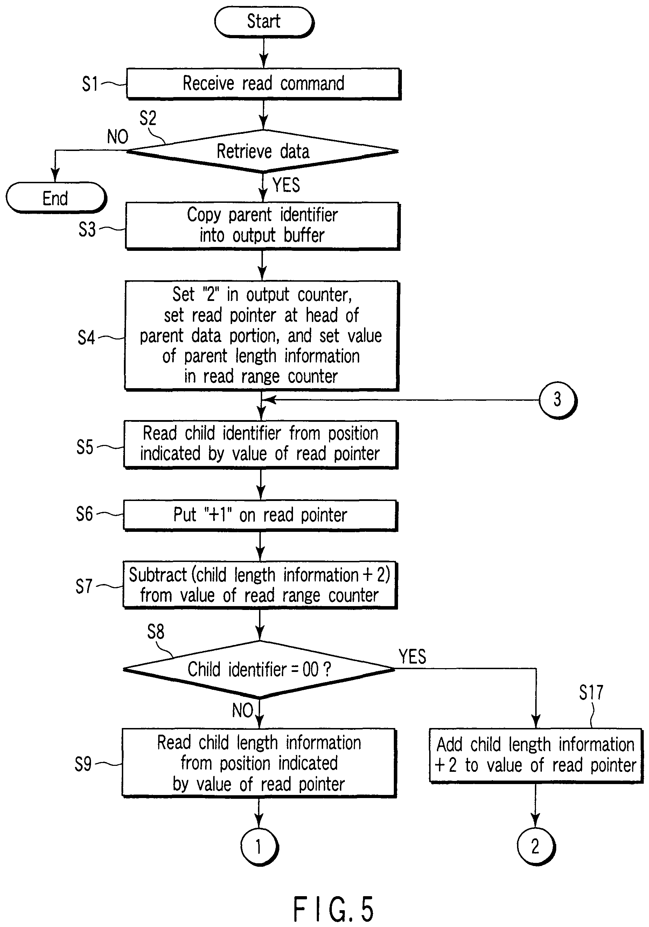

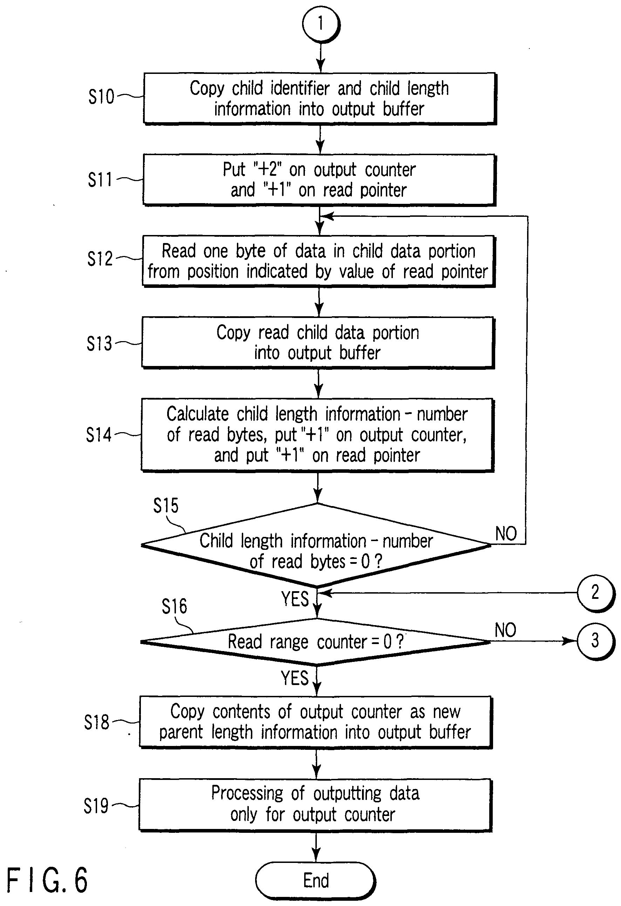

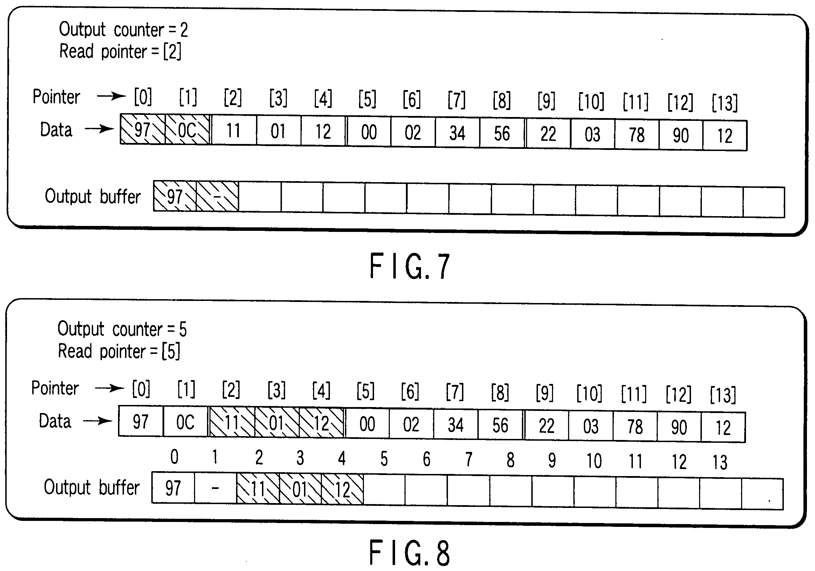

FIGS. 5 and 6 are flowcharts for explaining the processing of reading the nested structure data in response to a data read command. FIGS. 7, 8, 9 and 10 are diagrams for explaining the relation among the value of the output counter 106a, the value of the read pointer 106b and data stored in the output buffer in the reading processing intended to read the data having the nested structure shown in FIG. 4.

It is to be noted that, here, the processing of reading the nested structure data will be described properly referring to FIGS. 4, 7, 8, 9 and 10 in addition to the flowcharts shown in FIGS. 5 and 6.

First, it is assumed that the card reader/writer 12 as an external device has transmitted a data read command to the IC card 11. It is to be noted that, here, the above data read command is a data read command which has specified the data having the nested structure by the identifier (a command to require the read of the nested structure data).

The data read command transmitted from the card reader/writer 12 is received by the communication unit 102 of the IC card 11 (step S1). The data read command received by the communication unit 102 is supplied from the communication unit 102 to the CPU 104.

When the data read command is supplied to the CPU 104, the CPU 104 of the IC card 11 judges whether or not data to be read (parent data) specified by the command exists in the data memory 105 (step S2).

When this judgment is that the data to be read specified by the command does not exist, the CPU 104 returns a response implying an error to the card reader/writer 12, and terminates the processing.

When the judgment is that the data to be read specified by the received command exists, the CPU 104 copies first one byte of the data (parent data) to a first one byte of the output buffer 106c provided in the working memory 106 (step S3). For example, the first one byte is the parent identifier 201 in the data having the configuration shown in FIG. 4. Therefore, data "97" stored in the parent identifier 201 is copied into the head (first byte) of the output counter 106a in the working memory 106.

When the first one byte of the data is copied into the first byte of the output counter 106a, the CPU 104 sets a numerical value "2" in the output counter 106a provided in the working memory 106, and sets in the read pointer 106b "2" indicating the head position of the data portion 203 of the parent data, and further sets the value of the parent length information 202 in the read range counter 106d (step S4).

The output counter 106a indicates the number of bytes written into the output buffer 106c. Thus, in a situation where "2" is set in the output counter 106a, the second byte in the output buffer 106c is free. The second byte in the output buffer 106c is intended to store data indicating the length of the entire data finally output in the processing described later.

Furthermore, data indicating the reading position in the data is stored in the read pointer 106b. Thus, for example, in the example shown in FIG. 4, when "2" is set in the read pointer 106b, the read pointer 106b indicates the first child identifier 204 storing "11".

Furthermore, the read range counter 106d stores a value indicating the length of remaining data to be read. Thus, in an initial state, the value of the parent length information in the parent data is set in the read range counter 106d. Moreover, when the read range counter 106d shows "0", this means that there is no remaining data to be read.

FIG. 7 shows the value of the output counter 106a, the value of the read pointer and data stored in the output buffer 106c in a situation where the processing up to step S4 has been completed in the data reading processing shown in FIG. 4. In the example shown in FIG. 7, "2" is stored in the output counter 106a, "2" is stored in the read pointer 106b, and one byte of data read from the head of the data (i.e., the parent identifier "97" of the specified parent data) is stored in the first byte in the output buffer 106c.

Next, the CPU 104 performs the processing of reading the child data. That is, the CPU 104 first reads the data (here, "11" of the child identifier 204) at the position indicated by the value of the read pointer 106b, and temporarily stores the data in the working memory 106 (step S5). When the data at the position indicated by the value of the read pointer 106b is read, the CPU 104 adds one to the value of the read pointer 106b (step S6). For example, when the value of the read pointer 106b is "2", the CPU 104 updates the value of the read pointer 106b to 2 + 1 = "3". It is to be noted that in the example of data shown in FIG. 4, when the value of the read pointer 106b is, for example, "3", the first child length information 205 whose data value is "01" is indicated as the reading position.

Furthermore, when the read pointer 106b is updated in step S6, the CPU 104 subtracts "the value of the child length information for the child data + 2" from the value of the read range counter 106d (step S7). For example, when the identifier of the first child data is read, the CPU 104 sets the value of [the length information for the parent data - (the child length information + 2)] in the read range counter 106d.

When the read range counter 106d is updated in step S7, the CPU 104 judges whether or not it shows a particular value (e.g., "00") indicating that the child identifier (e.g., the first child identifier 204) read in step S5 is invalid (step S8).

When this judgment is that the value is not the particular value indicating that the read child identifier is invalid, that is, when the child data indicated by the child identifier is judged as valid, the CPU 104 reads the child length information as the data on the position indicated by the value of the read pointer 106b, and temporarily stores the read child length information in the working memory 106 (step S9). For example, in the data shown in FIG. 4, when the value of the read pointer 106b is "3", the CPU 104 reads the child length information 205 whose data value is "01", and temporarily stores the information in the working memory 106.

When the child length information is read in step S9, the CPU 104 copies data on the child identifier and data on the child length information temporarily stored in the working memory 106 (e.g., "11" as the data on the first child identifier 204 and "01" as the first child length information 205) into the output buffer 106c (step S10). At this point, the CPU 104 decides the position for writing data in the output buffer 106c on the basis of the position indicated by the value of the output counter 106a. For example, when the output counter 106a is "2", that is, when the value of the output counter 106a indicates that two bytes of data have been stored, the CPU 104 copies the data on the child identifier (e.g., the data on the first child identifier) into the third byte in the output buffer 106c, and copies the data on the child identifier (e.g., the data on the first child length information) into the fourth byte.

When the data on the child identifier and the child length information are stored in the output buffer 106c in step S10, the CPU 104 puts "+2" on the value of the output counter 106a in the working memory 106, and adds one to the value of the read pointer 106b (step S11). This is processing in which the value of the read pointer 106b is set to indicate the head position of the child data portion and the value of the output counter 106a is set to indicate the position of the output buffer 106c storing data up to the child length information for the child data.

When the values of the output counter 106a and the read pointer 106b are updated in step S11 the CPU 104 reads the data in the first one byte (i.e., the first one byte in the child data portion) from the position indicated by the value of the read pointer 106b (step S12), and copies the read data into the output buffer 106c in the working memory 106 (step S13). At this point, the CPU 104 copies the read one byte of data into the output buffer 106c. It is to be noted that the CPU 104 may judge the position in the output buffer 106c for storing the read one byte of data on the basis of the value of the output counter 106a.

When the one byte of data read from the child data portion has been copied into the output buffer 106c, the child data portion, the CPU 104 performs the processing of putting "+1" on the value of the output counter 106a, putting "+1" on the read pointer 106b and subtracting "the number of bytes read from the child data portion" from "the value of the child length information" (step S14). For example, when the data of the first one byte is read from the child data portion, the CPU 104 calculates the value "(the value of the child length information) - 1". Moreover, when the two bytes of data are read from the child data portion, the CPU 104 calculates the value "(the value of the child length information) - 2".

When the value "(the value of the child length information) - (the number of bytes read from the child data portion)" is calculated, the CPU 104 judges whether or not the calculated "(the value of the child length information) - (the number of bytes read from the child data portion)" is "0" (step S15). This is a judgment to ascertain whether the byte next to the read byte is the data in the child data portion. In other words, whether or not all the data in the child data portion has been read is judged in step S15.

When this judgment is that the value "(the value of the child length information) - (the number of bytes read from the child data portion)" is not "0", that is, when the judgment is that there is data which has not been read in the child data portion (step S15, NO), the CPU 104 proceeds to step S12, and performs the processing of reading data of the next byte as the data in the child data portion and copying the data into the output buffer 106c. Thus, the processing in steps S12 to S14 is repeatedly executed until all the data in the child data portion is read.

When the judgment is that the value "(the value of the child length information) - (the number of bytes read from the child data portion)" is "0" (step S15, YES), the CPU 104 judges that there is not the data of the next byte in the child data portion (all the data in the child data portion has been read).

FIG. 8 shows the value of the output counter 106a, the value of the read pointer and data stored in the output buffer 106c in a situation where the processing up to step S15 for the first child data 207 has been completed in the data reading processing shown in FIG. 4. In the example shown in FIG. 8, "5" is stored in the output counter 106a, and "5" is stored in the read pointer 106b. Further, in the example shown in FIG. 8, the parent identifier "97" of the parent data is stored in the first byte and the entire first child data 207 ("11", "01" and "12") are stored in the third to fifth bytes in the output buffer 106c.

Furthermore, when judging that all the data in the child data portion has been read (step S15, YES), the CPU 104 judges whether or not the value of the read range counter 106d is "0" (step S16). When this judgment is that the value of the read range counter 106d is not "0" (step S16, NO), the CPU 104 judges that there is next child data following the read child data. Therefore, the CPU 104 returns to step S5 to perform the processing similar to the processing described above. Thus, the processing in steps S5 to S16 is executed for all the child data stored in the data portion of the parent data.

Furthermore, when judging that the read child identifier has a particular value ("00") (step S8, YES), the CPU 104 updates the value of the read pointer to a value to which "the value of the child length information for the child data + 2" is added (step S17), and proceeds to step S16.

For example, in the example of data shown in FIG. 4, the child identifier 208 has the particular value ("00"). Therefore, when the child identifier 208 is read, the CPU 104 only adds ["02" as the value of the child length information 209 + 2 = 4] to the value of the read pointer 106b (here, "5") to achieve "5 + 4 = 9" (step S17), and proceeds to step S16. That is, in the example of data shown in FIG. 4, the second child identifier 208 of the second child data 211 has the particular value ("00"). Thus, the second child data 211 is processed as invalid data. Consequently, the child data 211 of the child identifier 208 is not copied into the output buffer 106c.

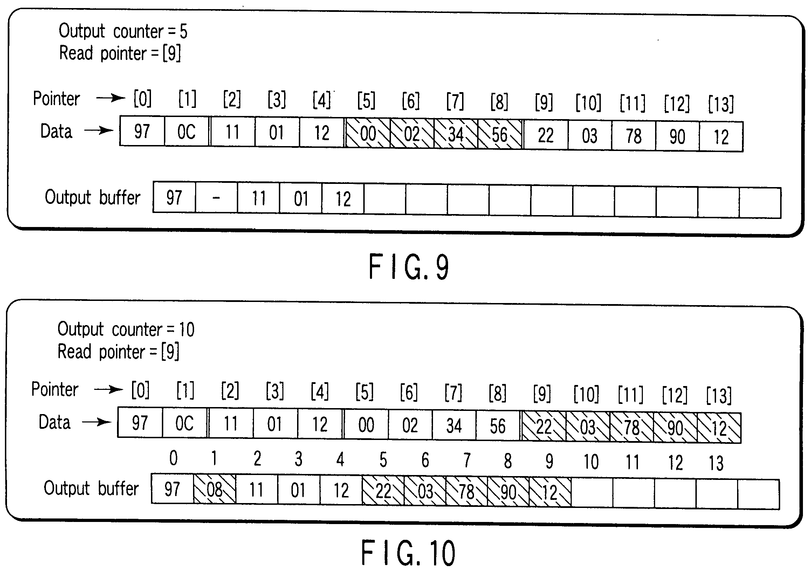

FIG. 9 shows the value of the output counter 106a, the value of the read pointer and data stored in the output buffer 106c in a situation where the processing up to step S17 for the second child data 211 has been completed in the data reading processing shown in FIG. 4. In the example shown in FIG. 9, "5" is stored in the output counter 106a, and "9" is stored in the read pointer 106b. Further, in the example shown in FIG. 9, the parent identifier "97" of the parent data is stored in the first byte and the entire first child data 207 ("11", "01" and "12") are stored in the third to fifth bytes in the output buffer 106c, as in the example shown in FIG. 8. Moreover, in the example shown in FIG. 9, the value of the read pointer indicates the position of the identifier of the third child data, but the second child data 211 is not stored in the output buffer 106c. This signifies that the second child data 211 whose identifier is "00" is omitted from the output data.

Furthermore, when judging that the value of the read range counter 106d is "0" in step S16, the CPU 104 determines that there is not next data following the above data. In this case, the CPU 104 sets the length information for data (output data) stored in the output buffer 106c on the basis of the value of the output counter 106a ("10" in the example shown in FIG. 10) (step S18). Here, the value of the output counter 106a is the length of all the data stored in the output buffer 106c. Moreover, the data in the first byte in the output buffer 106c is the identifier of the parent data, and the second byte thereof is the place for storing the length information for the output data. Therefore, information indicating the length of the third byte and thereafter is stored in the first byte. Thus, as the length information, "the value of the output buffer 106c - 2" is stored in the second byte of the output buffer 106c (step S18).

FIG. 10 shows the value of the output counter 106a, the value of the read pointer and data stored in the output buffer 106c in a situation where the processing up to step S18 has been completed in the data reading processing shown in FIG. 4. In the example shown in FIG. 10, "10" is stored in the output counter 106a, and "9" is stored in the read pointer 106b. Further, in the example shown in FIG. 10, the parent identifier "97" of the parent data is stored in the first byte, and the entire first child data 207 ("11", "01" and "12") are stored in the third to fifth bytes, and the entire third child data 215 ("22", "03", "78", "90" and "12") are stored in the sixth to tenth bytes, in the output buffer 106c. Moreover, in the example shown in FIG. 10, "the value of the output counter (10) - 2 = 8" is stored as the data length information in the second byte of the output buffer 106c.

In the example shown in FIG. 10, the output data (read data) is configured so that the valid child data (the first child data and the third child data) are only combined in such a manner as to be aligned to the left excepting the invalid data (the second child data) and the value indicating the length of these data (the value of the output buffer - 2) is set as the length information. That is, in the example shown in FIG. 10, the obtained output data include the identifier of the parent data as the identifier, the length information based on the value of the output counter 106a as the length information, and the data in which the first child data is combined with the third child data as the data portion. Moreover, in the example shown in FIG. 10, the read data (data stored in the output buffer 106c) does not contain the second child data whose identifier is set to "00".

When the length information for the data stored in the output buffer 106c in step S18 is stored, the CPU 104 outputs the data stored in the output buffer 106c to the card reader/writer 12 as a response to the above-mentioned data read command. That is, the CPU 104 outputs, to the card reader/writer 12, the output data in which the length information based on the value of the output counter 106a is set in the data obtained by only combining the valid child data in the specified parent data (step S19).

As described above, in the embodiment, when a read command specifying the data having the nested structure is received, the parent data thereof is checked to find whether or not the identifier of each child data has the particular value ("00") indicating the invalidity of the data, and the child data whose identifier has the particular value is omitted, such that the data comprising the valid child data alone is produced as the output data.

In this manner, the IC card can output the valid data alone without outputting the invalid data, thereby enabling efficient data processing. Further, since it is not necessary for a higher-level device (terminal device) side to judge the validity of the data received from the IC card, the data can be easily handled. Still further, since the output data does not contain invalid data, it is possible to significantly improve the speed of communication between the IC card and the card reader/writer. Further yet, the identifier of unnecessary child data is rewritten without rewriting the entire data, such that the unnecessary child data can be easily invalidated.

Furthermore, examples of the employment of the IC card to which the embodiment as described above is applied include, for example, a passport card (an IC card for a passport). When such an IC card saves data for biometric information on a fingerprint, iris or the like as the data having the nested structure, data that is no longer required can be easily invalidated by changing the identifier to a value indicating the invalidity without rewriting the entire data. For example, the biometric information on the owner of the card is recorded in the nested structure data, and the identifier of the biometric information which is not used is suitably set to a particular value indicating the invalidity, such that particular biometric information alone can be easily invalidated.

Still further, application to a financial card (IC card for a credit card) or the like is also conceivable. For example, in the case of the financial card, the IC card can be applied to limit country codes which permit the use of the card. In this case, the country codes which permit the use of the card are recorded in the nested structure data, and the identifiers of the codes of the countries where the card is not to be used are suitably set to a particular value indicating the invalidity, such that the use in particular countries can be easily prohibited.

Further yet, for example, application to a security card (IC card for entry/exit) is also conceivable. For example, in the case of the security card, the IC card can be applied to limit the places where the entry is permitted. In this case, area codes which permit the entry are recorded in the nested structure data, and the identifiers of the codes of the areas where the entry is not permitted are suitably set to a particular value indicating the invalidity, such that the entry into particular areas can be easily limited.

In addition, the embodiment described above can also be applied to portable electronic devices other than the IC card. For example, the embodiment described above can also be applied to a portable terminal device called a PDA or a mobile telephone. Moreover, the embodiment described above can also be applied to a booklet-type, block-type or tag-type IC tag.

It is explicitly stated that all features disclosed in the description and/or the claims are intended to be disclosed separately and independently from each other for the purpose of original disclosure as well as for the purpose of restricting the claimed invention independent of the composition of the features in the embodiments and/or the claims. It is explicitly stated that all value ranges or indications of groups of entities disclose every possible intermediate value or intermediate entity for the purpose of original disclosure as well as for the purpose of restricting the claimed invention, in particular as limits of value ranges.

## Claims

1. A module for a portable electronic device, adapted to operate in accordance with a command, comprising:
a memory (105) which stores parent data having a TLV structure, wherein the TLV structure connects a tag, a length and a value, and wherein the value of the parent data comprises a plurality of child data (207, 211, 215, 219) each having the TLV structure; and
a processing unit (104) configured to output only valid child data in the value (203) of the parent data on the basis of the tag (204, 208, 212, 216) of the child data (207, 211, 215, 219) when a command is given from an external device to require reading of data which designates the parent data stored in the memory (105), **characterized in that**
the tag (201, 204, 208, 212, 216) is set to a particular value indicating invalidity when the data is invalid data, and
the processing unit (104) is configured to judge whether or not each of the child data (207, 211, 215, 219) is invalid in accordance with whether or not the tag of each of the child data has the particular value indicating the invalidity.

2. The module according to claim 1, **characterized in that**
the processing unit (104) is configured to output data with which valid child data in the value of the parent data included in the data having the TLV structure is connected as response data of the command.

3. The module according to claim 2, **characterized in that**
the processing unit (104) is configured to output data in which the tag (201) of the parent data is assigned to data with which data of the value of each valid data is connected, the processing unit (104) outputting the data as the response data.

4. The module according to claim 3, **characterized in that**
the processing unit (104) is configured to output data having a TLV structure in which a tag is assigned as the tag of the parent data to a value corresponding to data with which data of the value of each valid child data is connected and a length corresponding to data indicating the length of the data with which the data of the value of each valid child data is connected, the processing unit being configured to output the data as the response data.

5. A portable electronic device including the module according to any one of claims 1 to 4 and a contact type terminal for performing contact type communications with an external device connected to the module.

6. A portable electronic device including the module according to any one of claims 1 to 4 and an antenna for performing contactless type communications with an external device connected to the module.

7. An IC card comprising a main body including the module according to any one of claims 1 to 4 and a contact type terminal for performing contact type communications with an external device connected to the module.

8. An IC card comprising a main body including the module according to any one of claims 1 to 4 and an antenna for performing contactless type communications with an external device connected to the module.

## Patentansprüche

1. Modul für eine portable Elektronikvorrichtung, angepasst zum Betrieb gemäß einem Befehl, mit:
einem Speicher (155), der Vorgängerdaten mit einer TLV-Struktur speichert, wobei die TLV-Struktur ein Tag, eine Länge und einen Wert verknüpft und der Wert der Vorgängerdaten mehrere Nachfolgerdaten (207, 211, 215, 219), die jeweils die TLV-Struktur haben, aufweist; und
einer Prozessoreinheit (104), die zum Ausgeben lediglich gültiger Nachfolgerdaten in dem Wert (203) der Vorgängerdaten auf der Basis des Tags (204, 208, 212, 216) der Nachfolgerdaten (207, 211, 215, 219), wenn von einer externen Vorrichtung ein Befehl zum Lesen von Daten gegeben wird, der die in dem Speicher (105) gespeicherten Vorgängerdaten angibt, ausgebildet ist, **dadurch gekennzeichnet, dass**
das Tag (201, 204, 208, 212, 216) auf einen bestimmten Wert, der eine Ungültigkeit angibt, gesetzt wird, wenn die Daten ungültige Daten sind, und
die Prozessoreinheit (104) zum Beurteilen, ob die jeweiligen Nachfolgerdaten (207, 211, 215, 219) ungültig sind oder nicht, in Abhängigkeit davon, ob das Tag der jeweiligen Nachfolgerdaten den bestimmten Wert, der die Ungültigkeit angibt, aufweist, ausgebildet ist.

2. Modul nach Anspruch 1, **dadurch gekennzeichnet, dass**
die Prozessoreinheit (104) zum Ausgeben von Daten, mit denen gültige Nachfolgerdaten in dem Wert der Vorgängerdaten, der in den Daten mit der TLV-Struktur enthalten ist, verknüpft sind, als Antwortdaten auf den Befehl ausgebildet ist.

3. Modul nach Anspruch 2, **dadurch gekennzeichnet, dass**
die Prozessoreinheit (104) zum Ausgeben von Daten, in denen das Tag (201) der Vorgängerdaten Daten zugewiesen ist, mit denen Daten des Werts jeweiliger gültiger Daten verknüpft sind, ausgebildet ist, wobei die Prozessoreinheit (104) die Daten als die Antwortdaten ausgibt.

4. Modul nach Anspruch 3, **dadurch gekennzeichnet, dass**
die Prozessoreinheit (104) dazu ausgebildet ist, Daten mit einer TLV-Struktur auszugeben, in der ein Tag als das Tag der Vorgängerdaten einem Wert, der Daten entspricht, mit denen Daten des Werts jeweiliger gültiger Nachfolgerdaten verknüpft sind, und einer Länge, die Daten, die die Länge der Daten angeben, mit denen die Daten des Werts jeweiliger Nachfolgedaten verknüpft sind, entspricht, zugewiesen ist, wobei die Prozessoreinheit zum Ausgeben der Daten als die Antwortdaten ausgebildet ist.

5. Tragbare Elektronikvorrichtung mit dem Modul nach einem der Ansprüche 1 bis 4 und einem Anschluss des Kontakttyps zum Durchführen von Kommunikationen des Kontakttyps mit einer externen Vorrichtung, die mit dem Modul verbunden ist.

6. Portable Elektronikvorrichtung mit dem Modul nach einem der Ansprüche 1 bis 4 und einer Antenne zum Durchführen von Kommunikationen des kontaktlosen Typs mit einer externen Vorrichtung, die mit dem Modul verbunden ist.

7. IC-Karte mit einem Hauptkörper mit dem Modul nach einem der Ansprüche 1 bis 4 und einem Anschluss des Kontakttyps zum Durchführen von Kommunikationen des Kontakttyps mit einer externen Vorrichtung, die mit dem Modul verbunden ist.

8. IC-Karte mit einem Hauptkörper mit dem Modul nach einem der Ansprüche 1 bis 4 und einer Antenne zum Durchführen von Kommunikationen des kontaktlosen Typs mit einer externen Vorrichtung, die mit dem Modul verbunden ist.

## Revendications

1. Module destiné à un dispositif électronique portatif, adapté pour fonctionner selon une commande, comprenant :
une mémoire (105) qui stocke des données parent ayant une structure TLV, dans lequel la structure TLV relie une balise, une longueur et une valeur, et dans lequel la valeur des données parent comprend une pluralité de données enfant (207, 211, 215, 219) ayant chacune la structure TLV ; et
une unité de traitement (104) configurée pour délivrer uniquement des données enfant valides dans la valeur (203) des données parent sur la base de la balise (204, 208, 212, 216) des données enfant (207, 211, 215, 219) lorsqu'une commande est fournie par un dispositif externe afin d'exiger la lecture de données qui désignent les données parent stockées dans la mémoire (105), **caractérisé en ce que**
la balise (201, 204, 208, 212, 216) est définie sur une valeur particulière qui indique une invalidité lorsque les données sont des données invalides, et
l'unité de traitement (104) est configurée pour juger si chacune des données enfant (207, 211, 215, 219) est invalide ou non selon le fait que la balise de chacune des données enfant présente ou non la valeur particulière qui indique l'invalidité.

2. Module selon la revendication 1, **caractérisé en ce que**
l'unité de traitement (104) est configurée pour délivrer des données avec lesquelles les données enfant valides dans la valeur des données parent incluses dans les données qui présentent la structure TLV sont en lien sous forme de données de réponse de la commande.

3. Module selon la revendication 2, **caractérisé en ce que**
l'unité de traitement (104) est configurée pour délivrer des données dans lesquelles la balise (201) des données parent est affectée à des données avec lesquelles les données de la valeur de chaque donnée valide sont en lien, l'unité de traitement (104) délivrant les données sous forme de données de réponse.

4. Module selon la revendication 3, **caractérisé en ce que**
l'unité de traitement (104) est configurée pour délivrer des données ayant une structure TLV dans laquelle une balise est affectée sous forme de balise des données parent selon une valeur qui correspond aux données avec lesquelles les données de la valeur de chaque donnée enfant valide sont en lien, et une longueur qui correspond à des données qui indiquent la longueur des données avec lesquelles les données de la valeur de chaque donnée enfant valide sont en lien, l'unité de traitement étant configurée pour délivrer les données sous forme de données de réponse.

5. Dispositif électronique portatif comprenant le module selon l'une quelconque des revendications 1 à 4 et un terminal à contact destiné à effectuer des communications avec contact avec un dispositif externe relié au module.

6. Dispositif électronique portatif comprenant le module selon l'une quelconque des revendications 1 à 4 et une antenne destinée à effectuer des communications sans contact avec un dispositif externe relié au module.

7. Carte de circuit intégré comprenant un corps principal comprenant le module selon l'une quelconque des revendications 1 à 4 et un terminal à contact destiné à effectuer des communications avec contact avec un dispositif externe relié au module.

8. Carte de circuit intégré comprenant un corps principal comprenant le module selon l'une quelconque des revendications 1 à 4 et une antenne destinée à effectuer des communications sans contact avec un dispositif externe relié au module.
